# EUROPEAN PATENT SPECIFICATION

(11) **EP 2 304 649 B1**
(45) Date of publication and mention of the grant of the patent: **10.05.2017**
(21) Application number: 09800697.6
(22) Date of filing: 23.07.2009
(51) Int. Cl.: G06K 9/36, G06K 9/68

(54) **FRAME BASED VIDEO MATCHING**
FRAME-BASIERTER VIDEOABGLEICH
MISE EN CORRESPONDANCE VIDÉO À BASE DE TRAMES

(30) Priority: 23.07.2008 US 82961 P
(43) Date of publication of application: 06.04.2011
(73) Proprietor: JASTEC CO, Minato-ku Tokyo 108-0074 (JP)
(72) Inventor: WINTER, Alexandre, Brooklyn NY 11215 (US); DOLLE, Simon, 92300 Levallois-Perret (FR); JAHARD, Frédéric, 94300 Vincennes (FR); WENGERT, Christian, 8045 Zürich (CH)
(74) Representative: Le Guen-Maillet
(86) International application number: PCT/US2009/004324
(87) International publication number: WO 2010/011344

(56) References cited:
- WO-A2-2008/049851
- US-A1- 2006 120 670
- US-A1- 2006 152 585
- US-A1- 2007 038 612
- US-A1- 2008 059 991
- US-A2- 2007 143 265
- CHIH-YI CHIU ET AL: "Efficient and Effective Video Copy Detection Based on Spatiotemporal Analysis", MULTIMEDIA, 2007. ISM 2007. NINTH IEEE INTERNATIONAL SYMPOSIUM ON, IEEE, PISCATAWAY, NJ, USA, 1 December 2007 (2007-12-01), pages 202-209, XP031197373, DOI: 10.1109/ISM.2007.4412375 ISBN: 978-0-7695-3058-1
- XIANFENG YANG ET AL: "Content-based video identification: a survey", INFORMATION TECHNOLOGY: RESEARCH AND EDUCATION, 2003. PROCEEDINGS. ITR E2003. INTERNATIONAL CONFERENCE ON AUG. 11-13, 2003, PISCATAWAY, NJ, USA,IEEE, 11 August 2003 (2003-08-11), pages 50-54, XP010684971, DOI: 10.1109/ITRE.2003.1270570 ISBN: 978-0-7803-7724-0
- MASSOUDI A ET AL: "A Video Fingerprint Based on Visual Digest and Local Fingerprints", IMAGE PROCESSING, 2006 IEEE INTERNATIONAL CONFERENCE ON, IEEE, PI, 1 October 2006 (2006-10-01), pages 2297-2300, XP031049132, DOI: 10.1109/ICIP.2006.312834 ISBN: 978-1-4244-0480-3

## Description

### BACKGROUND OF THE INVENTION

### 1. Field of the Invention

This invention relates generally to video analysis systems and methods and, more particularly, to systems and methods for comparing and matching frames within video streams based upon representations of visual signatures or characteristics of the frames (referred to herein as "video content DNA" or "content DNA").

### 2. Description of Related Art

Generally speaking, conventional methods of comparing and matching content within a video file include comparing each frame within a sequence of frames of the video using an image matching approach. As such, conventional frame-by-frame analysis of videos tends to be computationally intensive. Attempts have been made to reduce computational costs by comparing and matching content within a video using temporal and spatial matching of the frames of the video. However, a need remains for improving the efficiency and computational speed at which video analysis and matching is performed.

The document "Efficient and effective Video Copy Detection Based on Spatiotemporal Analysis, Chih-Yi Chiu, Cheng-Chih Yang, Chu-Song Chen, Ninth IEEE International Symposium on Multimedia 2007" discloses a method for Video Copy Detection based on Spatiotemporal Analysis.

The document WO2008/049851 discloses a method for comparing groups of images.

The document "Content-based Video Identification: a survey, Xianfeng et al., Information technology: Research and education, 2003, Proceedings. ITR E2003,

Aug. 11-13, 2003, Piscataway, NJ, USA, IEEE, XP010684971" presents a survey on video identification methods, based on some important aspects in content-based video identification, such as its representative feature and matching methods.

The document "Massoudi A et Al. : A video Fingerprint Based on Visual Digest and Local Fingerprints, IEEE International Conference On Image Processing, 2006, XP031049132" discloses a method for extracting unique and specific features from a video.

The inventors have discovered an approach that is based on the assumption that the precision of employing image matching techniques to video frames is precise enough and has low enough false positive rates to offer a reliable solution for finding matching videos. Further, the inventors have discovered that comparing and matching selected frames within subject videos provides improvements in computing efficiency and speed while permitting detection of common parts or sections of videos to allow for successful video matching.

### SUMMARY OF THE INVENTION

The present invention is directed to a method for identifying a plurality of videos within a corpus of reference videos matching at least one query video. The method includes providing the corpus of reference videos and receiving an input search criteria. The criteria includes the at least one query video, a parameter representing a desired search mode and a parameter representing a desired matching mode. Once the criteria is received, the method includes indexing each video in the corpus of reference videos frame by frame and determining a visual signature for each of the reference videos based on visual signatures of at least one of all frames within the reference video or a subset of frames within the reference videos. When signatures for each of the reference videos are determined, the method includes determining a visual signature of the query video and comparing the visual signatures of each video within the corpus of reference videos to the visual signature of the at least one query video, and identifying videos within the corpus of reference videos that match the at least one query video.

In one embodiment, indexing each of the reference videos includes reading each video frame by frame, comparing one frame to a next frame, and determining subsets of frames within each of the videos including anchor frames, heart beat frames and key frames. In one embodiment, a primary visual signature determined for each of the reference videos is based on the visual signatures of all frames within the reference video. In another embodiment, a secondary visual signature determined for each of the reference videos is based on the visual signatures of at least one of the subsets of frames within the reference video. In one embodiment, the comparison of the visual signatures of each reference video to the visual signature of the query video includes first comparing the secondary visual signatures to identify matches and, if no satisfactory matching results are obtained, only then determining the primary visual signatures for each reference video and comparing the primary visual signatures to the visual signature of the query video.

### BRIEF DESCRIPTION OF THE DRAWINGS

The features and advantages of the present invention will be better understood when the Detailed Description of the Preferred Embodiments given below is considered in conjunction with the figures provided, wherein:
FIG. 1 is a simplified depiction of a video including a plurality of frames (F₁-Fx);
FIG. 2 is a simplified depiction of a corpus of reference videos (R₁-R_{N}) and a plurality of query videos (Q₁-Q_{M}).
FIG. 3 illustrates a frame based video matching system, in accordance with one embodiment of the present invention, for identifying videos within the corpus that have frames that match one or more frames within the query videos;
FIG. 4 depicts a process flow illustrating, in accordance with one embodiment of the present invention, steps for analyzing videos in a frame based video matching process; and
FIG. 5 depicts a process flow illustrating, in accordance with one embodiment of the present invention, steps for indexing a video file.

In these figures like structures are assigned like reference numerals, but may not be referenced in the description of all figures.

### DETAILED DESCRIPTION OF THE PREFERRED EMBODIMENTS

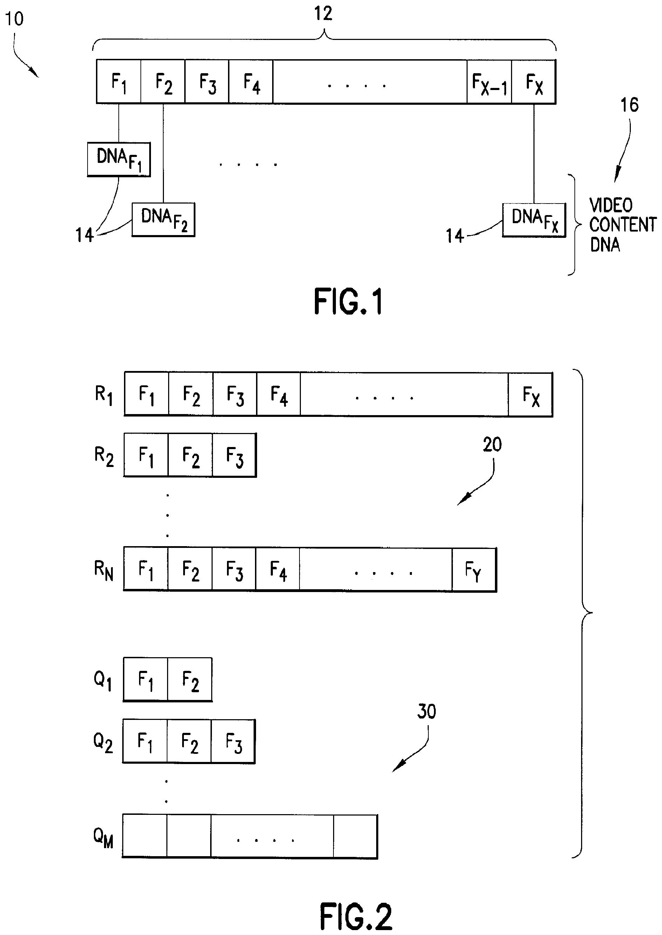

As illustrated in FIG. 1, a video 10 includes a plurality or sequence 12 of frames (F₁-F_{X}). Each frame, or a selected number of frames, is considered as a separate image such that image analysis routines may be employed to uncover videos or portions thereof that match a predetermined criterion or reference video or portion thereof. It should be appreciated that matching, as described herein, refers to identifying a degree of similarity of content within the videos or portion thereof. Similarity is based upon comparisons of representations of visual signatures or characteristics of the frames (e.g., the aforementioned video content DNA). As described in commonly owned U.S. Patent Application No.: 12/432,119, filed April 29, 2009, the content DNA is comprised of a plurality of visual descriptors and features representing visual properties of an image and objects therein. By using content DNA 14 (DNA F₁-DNA F_{X}) of one or more frames F₁-F_{X}, content DNA 16 for the video 10 is provided.

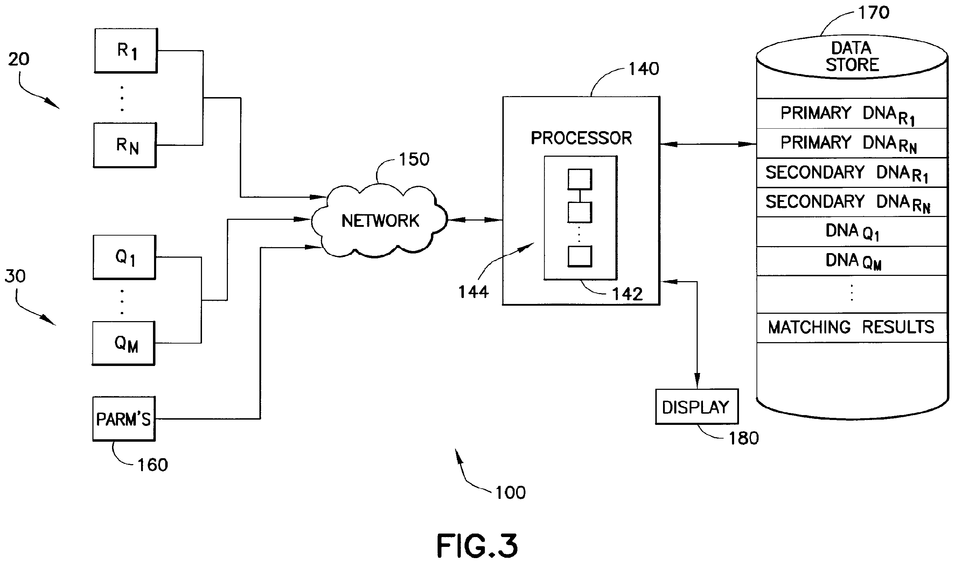

For example, FIG. 2 illustrates a typical matching approach, where a corpus 20 of reference videos R₁-R_{N} and a set 30 of query videos Q₁-Q_{M} are presented by a person initiating the match. The matching approach as described herein includes identifying videos within the corpus 20 of reference videos R₁-R_{N} that have common or matching sections or frames to each of the set of query videos Q₁-Q_{M}. As described below, the reference videos R₁-R_{N} are indexed and a visual signature is computed to provide content DNA for each of the reference videos R₁-R_{N.} As shown in FIG. 3, the present invention provides a frame based video matching system 100 implemented to identify visual information of interest within the corpus 20 to the person initiating the match. The video matching system 100 includes a processor 140 exercising a plurality of algorithms (described below) for generating a description of graphic content of frames within the reference videos R₁-R_{N}. As described herein, the video matching system 100 employs content DNA to provide more efficient and effective matching results than is achieved in conventional video search and match systems.

It should be appreciated that the processor 140 includes a computer-readable medium or memory 142 having algorithms stored therein, and input-output devices for facilitating communication over a network, shown generally at 150 such as, for example, the Internet, an intranet, an extranet, or like distributed communication platform connecting computing devices over wired and/or wireless connections, to receive and process the video data 20 and 30. The processor 140 may be operatively coupled to a data store 170. The data store 170 stores information 172 used by the system 100 such as, for example, content DNA of the reference videos R₁-R_{N} and query videos Q₁-Q_{M} as well as matching results. In one embodiment, the processor 140 is coupled to an output device 180 such as a display device for exhibiting the matching results. In one embodiment, the processor 140 is comprised of, for example, a standalone or networked personal computer (PC), workstation, laptop, tablet computer, personal digital assistant, pocket PC, Internet-enabled mobile radiotelephone, pager or like portable computing devices having appropriate processing power for video and image processing.

As shown in FIG. 3, the processor 140 includes a distributable set of algorithms 144 executing application steps to perform video recognition and matching tasks. Initially, the corpus 20 of reference videos R₁-R_{N} and the set 30 of query videos Q₁-Q_{M} are identified for processing. During a matching process, each of the query videos Q₁-Q_{M} is compared to the corpus 20 of reference videos R₁-R_{N}. For each of the query videos Q₁-Q_{M}, one goal of the frame based video matching system 100 as described herein is to find videos of the corpus 20 of reference videos R₁-R_{N} that have common parts with each of the query videos Q₁-Q_{M}. In one embodiment, the matching process is performed based upon one or more parameters 160. One of the parameters 160 of the matching system 100 is to know whether all videos in the corpus 20 of reference videos R₁-R_{N} that match a selected one of the query videos Q₁-Q_{M} should be found, or if one match is sufficient to terminate the search. If all matches within the corpus 20 of reference videos R₁-R_{N} need to be found that match the selected one of the query videos Q₁-Q_{M}, then the matching method proceeds in an "extensive search" or "exhaustive search" scenario or mode. If only one matching video needs to be found within the corpus 20 of reference videos R₁-R_{N}, then the matching process proceeds in an "alert detection" scenario or mode.

Another one of the parameters 160 of the frame based video matching process determines whether the system 100 searches for sections (e.g., sequences of one or more frames) of the selected one of the query videos Q₁-Q_{M} that match with one or more videos of the corpus 20 of reference videos R₁-R_{N} or a part thereof. When searching for sections, matching proceeds in a "sequence matching" scenario or matching mode. If the entire query video must be found in the corpus 20 of reference videos R₁-R_{N}, then the matching is done in a "global matching" scenario or matching mode. In the case of the sequence matching mode, an additional parameter represents the minimum duration (e.g., time or number of frames) of a sequence that is to be detected. This parameter is referred to as "granularity" g. Any sequence in the selected one of the query videos Q₁-Q_{M} that would be present in one of the corpus 20 of reference videos R₁-R_{N}, but with duration smaller than the granularity parameter g, may not be detected. Any sequence in the selected one of the query videos Q₁-Q_{M} with the same properties as one of the reference videos R₁-R_{N} but duration greater than the granularity parameter g is detected.

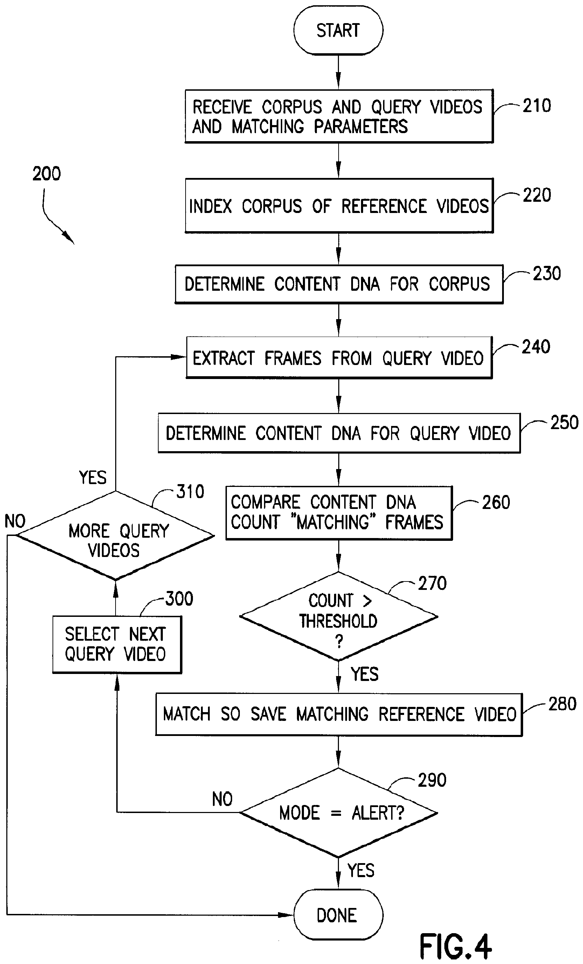

One embodiment of an inventive frame based video matching process 200 is depicted in FIG. 4. As shown in FIG. 4, the frame based video matching process 200 begins at Block 210 where the corpus 20 of reference videos R₁-R_{N}, the set 30 of query videos Q₁-Q_{M} and the matching process parameters 160 are provided to the processor 140 by, for example, a person initiating the matching process 200. At Block 220, the corpus 20 of reference videos R₁-R_{N} is indexed. In one aspect of the present invention, discussed in greater detail below, indexing includes identification of a subset of frames within each of the reference videos R₁-R_{N} from which a visual signature (video content DNA) of each reference videos R₁-R_{N} is generated and used for matching. Once indexed, at Block 230, content DNA is determined for each of the reference videos R₁-R_{N} based upon each frame or the subset of frames of the reference videos R₁-R_{N}. At Block 240, one or more frames of a selected one of the query videos Q₁-Q_{M} are processed. In one embodiment, a predetermined spacing of frames within the selected one of the query videos Q₁-Q_{M} are extracted for purposes of matching. For example, regularly spaced frames of the selected one of the query videos Q₁-Q_{M} are extracted. In one embodiment, the spacing of frames is based upon the granularity parameter g such that, for example, frames spaced by one half the granularity parameter are extracted. Once extracted, at Block 250, content DNA is determined for the selected one of the query videos Q₁-Q_{M} based upon the extracted frames.

At Block 260, the content DNA of the selected one of the query videos Q₁-Q_{M} is compared to content DNA for each of the reference videos R₁-R_{N}. During comparison, a count is maintained of all frames that the selected query video has in common with each separate one of the reference videos R₁-R_{N}. At Block 270, the count is compared to a predetermined matching threshold. If the selected one of the query videos Q₁-Q_{M} has more frames in common with a subject one of the reference videos R₁-R_{N} than the predetermined matching threshold, the subject one of the reference videos R₁-R_{N} is declared a match with the selected query video. At Block 280 the matching one of the reference videos R₁-R_{N} is tagged as matching by, for example, documenting the match in a results list, file or data set. At Block 290, the parameters 160 are evaluated to determine the matching mode of the current execution of the process 200, for example, whether the process 200 is being performed in the extensive/exhaustive matching mode or the alert detection matching mode. If the execution is being performed in the alert detection matching mode, control passes along a "Yes" path and execution ends. If the execution is being performed in the extensive/exhaustive detection matching mode, control passes along a "No" path from Block 290 and execution continues at Block 300 where a next one of the query videos Q₁-Q_{M} is selected. At Block 310 if there are no more query videos Q₁-Q_{M} to be selected, then control passes along a "No" path and execution ends. Otherwise, control passes from Block 310 along a "Yes" path and returns to Block 240 where execution continues by again performing the operations at Blocks 240 through Block 290.

The inventors have discovered that at least some of the perceived value of the frame based video matching process 200 of the present invention over conventional matching processes resides in the inventive process' simplicity and low complexity. For example, the inventive frame based video matching process 200 is an efficient and low false positives frame matching process.

As noted above, in one aspect of the present invention, each of the reference videos R₁-R_{N} are indexed (at Block 220) prior to generation of the video content DNA (at Block 230) for the reference videos. In one embodiment, a subset of frames within each of the reference videos R₁-R_{N} are identified during indexing and the visual signature (video content DNA) for the reference image is generated using the identified subset of frames. Accordingly, it is within the scope of the present invention to employ one or both of at least a primary content DNA (based on all frames within a subject video) and a secondary content DNA (based on a subset of frames within the subject video). For example, to illustrate the differences between the primary content DNA and the secondary content DNA it should be appreciated that content DNA as described herein is a local matching DNA as generated in accordance with the systems and methods described in the aforementioned commonly owned U.S. Patent Application No.: 12/432,119, filed April 29, 2009, wherein the content DNA is comprised of a plurality of visual descriptors and features representing visual properties of an image and objects therein. At least one effect of employing local matching DNA is that the resulting processing is CPU intensive. Thus, by reducing the number of frames evaluated, CPU processing is reduced. Moreover, the inventors have discovered that within many videos, matching frames are common and provide little help in uniquely identifying the overall video. Accordingly, the inventors have discovered an indexing process that identifies a subset of frames within a subject video that are more desirable for determining content DNA for matching processes. As should be appreciated, by generating content DNA only for the subset of frames, CPU processing is reduced.

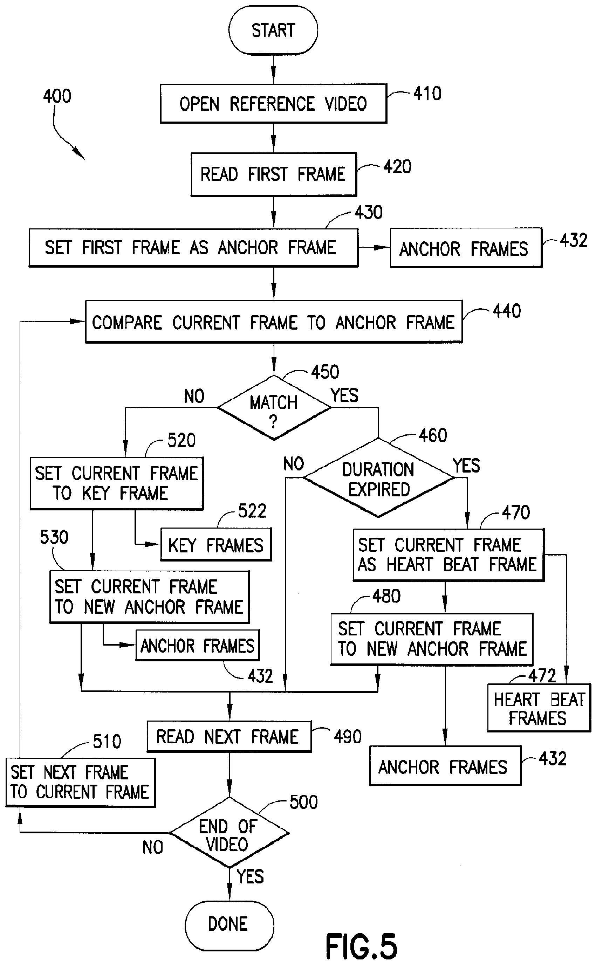

FIG. 5 depicts one embodiment of an inventive indexing process 400 for the indexing step 220 of the frame based video matching process 200 (FIG. 4). As shown in FIG. 5, the indexing process 400 begins at Block 410 where a video file (e.g., one of the reference videos R₁-R_{N}) is opened by the processor 140. At Block 420, the processor 140 reads a first frame of the video file. At Block 430, the first frame is assigned as an anchor frame and as a current frame. In one embodiment, a list, record or file 432 of anchor frames is maintained. In one embodiment, the file 432 is stored in the memory 144 of the processor 140 or the data store 170 coupled to the processor 140. At Block 440, the current frame is compared to the anchor frame. In one embodiment, the comparison is made with conventional image matching techniques where visually coherent objects or zones are identified and compared. At Block 450, the results of the comparison are evaluated. In the initial execution of the indexing process 400 where both the anchor frame and the current frame are the first frame of the video, the frames match such that control passes along a "Yes" path from Block 450 to Block 460. At Block 460, a predetermined duration parameter is evaluated. In one embodiment, the duration parameter includes an indication or threshold number of consecutive frames that are allowed to match before triggering a further action. As only one frame (e.g., the first frame) has been evaluated, control passes along a "No" path from Block 460 to Block 490. At Block 490, the processor 140 reads a next frame from the video file. At Block 500, a result of the read operation of Block 490 is evaluated. If the end of the video file was reached and no next frame read, execution of the process 400 ends. Otherwise, if the read of the next frame is successful, then control passes along a "No" path from Block 500 to Block 510. At Block 510 the next frame is assigned as the current frame and the process 400 continues at Block 440 where the current frame is compared to the anchor frame.

The process 400 continues as above until the end of the video file is reached (determined at Block 500), the duration parameter is reached (determined at Block 460), or a non-matching frame is detected at Block 450. When the current frame continues to match the anchor frame and the duration expires (Block 460), control then passes along a "Yes" path from Block 460 to Block 470. At Block 470, the current frame is assigned as a heart beat frame. In one embodiment, a list, record or file 472 of heart beat frames is maintained. In one embodiment, the file 472 is stored in the memory 144 of the processor 140 or the data store 170. At Block 480, the current frame is assigned as a new instance of the anchor frame, the anchor file 432 is updated to include the current frame and control passes to Block 490 where a next frame is read, and then the operations of Block 500 are performed.

Referring again to Block 450, when the current frame is found to not match the anchor frame, control passes along a "No" path from Block 450 to Block 520. At Block 520, the current frame is assigned as a key frame. In one embodiment, a list, record or file 522 of key frames is maintained. In one embodiment, the file 522 is stored in the memory 144 of the processor 140 or the data store 170. At Block 530, the current frame is assigned as a new instance of the anchor frame, the anchor file 432 is again updated and control passes to Block 490 where a next frame is read, and then the operations of Block 500 are performed.

As noted above, the index process 400 continues until all frames of the video file (e.g., one of the reference videos R₁-R_{N}) are evaluated. At the conclusion of the index process 400 for each video file, each frame of video file has been evaluated and three subsets of the frames are determined. For example, anchor frames stored in file 432, heart beat frames stored in file 472 and key frames stored in file 522 are determined. In one embodiment, the primary DNA for a video is the local matching DNA based upon DNA determined for each frame within the video file, e.g., each frame of the subject one of the reference videos R₁-R_{N}. In one embodiment, the secondary DNA for the video is the local matching DNA based upon DNA determined for a subset of frames determined within the video file. For example, the secondary DNA is the local matching DNA based upon DNA determined for each frame within one or more of the anchor frames, the heart beat frames and key frames. It should be appreciated that if the secondary DNA is determined from the three subsets, the anchor frames, the heart beat frames and the key frames, most all consecutive duplicate or matching frames within the video file are eliminated from the DNA determination and CPU time is saved. It should also be appreciated that if the secondary DNA is determined from one subset of frames, for example, only from the key frames, even fewer frames are included in the DNA determination step so even more CPU time is saved.

Accordingly, the inventors have discovered that improved computational performance of the frame based video matching process 200 is achieved when the secondary DNA is determined at Block 230 rather than the primary DNA and when the secondary DNA is used in the matching process 200. As such, properties of the secondary DNA include: (1) being significantly faster to compute than the primary DNA; and (2) that the matching of the secondary DNA implies a match with the primary DNA.

In one embodiment, the secondary DNA is first used for detecting video frames that match between the query and reference videos. However, if a match is not found using the secondary DNA, then the computationally more complex primary DNA is computed and used in the matching step performed at Block 260. The inventors have discovered that the use of the secondary DNA improves CPU time by an average factor of about twenty (20) when indexing videos.

In one embodiment, the frame based video matching system 100 includes a kit for indexing videos made of, for example, an executable program and a library reference. The program indexes a video. The program takes a video file as input, extracts its key frames and saves them into, for example, a file.

The program parameters include, for example:
∘ video file;
∘ an output file that typically contains, for each frame, its content DNA in binary format, a unique identifier, and optionally information including a time code of the original frame;
∘ DNA type (e.g., descriptors employed in DNA computation);
∘ start/in and end/out codes if only part of the video should be indexed;
∘ frame distance threshold - default is one;
∘ (optional) frame divider - take only one frame out of X frames. This is an optimization setting, and may be adjusted. In one embodiment, a default is a value five (5) representing instruction to take one out of every five (5) frames;
∘ secondary DNA type - see above.

The library reference is such that the program is recursively applied and all videos within the library.

In another embodiment, frame based video matching system of the present invention includes a kit for video search and matching. The kit includes, for example:
A program to match a folder that contains videos (e.g., including the aforementioned query set Q₁-Q_{M}) with a reference database (e.g., including the aforementioned reference corpus R₁-R_{N}). In one embodiment, the program takes two folders as an input: one that contains files that make up the reference corpus R₁-R_{N}, and one that contains video files that make up the query set Q₁-Q_{M}. Other inputs are the granularity parameter, a parameter providing an indication of the searching mode (e.g., the "extensive search" or "alert detection" mode), and a parameter providing an indication of the matching mode (e.g., the "sequence matching" or "global matching" modes). Output of the executable includes a file that contains the matches detected.

Optionally, a program is provided for precisely matching two videos and validating a match. This makes it possible to run a precise comparison of two videos using the same matching process outlined above (process 200), but where matching frames are written to a disk or other memory location so that details of what matched may be reviewed. In one embodiment, the program input includes two video files, e.g., the query set Q and the reference corpus R. In one embodiment, output of the program is a set of tiles and frames created in, for example, an output folder.

Optionally, a program to compute statistics with respect to the outputs of the matching process 200, based on a predetermined "ground truth." The ground truth is a set of videos that are declared matching by the person initiating the match process 200. The statistics help in computing performance and quality on a set of videos.

## Claims

1. A method for identifying a plurality of videos (10) within a corpus of reference videos (20) matching at least one query video (10), the method comprising:
providing the corpus of reference videos (20);
receiving by a processor (140) an input search criteria, the criteria including the at least one query video (10), a parameter representing a desired search mode and a parameter representing a desired matching mode;
indexing, by the processor (140), each video (10) in the corpus of reference videos (20) frame by frame, the step of indexing including, reading by the processor each of the videos of the corpus of reference videos frame by frame, and comparing one frame to a next frame and determining a subset of frames within each of the videos, the subset excluding consecutive duplicate frames within the associated reference video (10) and including anchor frames, heart beat frames and key frames, an anchor frame being a previous frame used for comparison with a next frame, a key frame being a frame that does not match according to a given matching criteria to an anchor frame with which it is compared, an heart beat frame being a frame that matches with the anchor frame with which it is compared but for which a duration since the anchor frame with which it is compared is above a predetermined duration; and,
determining a secondary visual signature (14) for each of the reference videos (10), each secondary visual signature (14) being associated with the subset of frames of the associated reference video (10), the step of determining the secondary visual signature for each of the reference videos including determining a secondary visual signature based on visual signatures of each of the anchor frames, heart beat frames and the key frames of each of the reference videos;
determining, by the processor (140), a visual signature (16) of the at least one query video (10);
comparing by the processor (140), the secondary visual signature (14) of each video (10) within the corpus of reference videos (20) to the visual signature (16) of the at least one query video (10), and in case that a match is not found, determining, for each of the reference videos, a primary visual signature (16) based on visual signatures of each of the frames of the reference video and comparing the primary visual signature (16) of each of the reference videos (10) to the visual signature (16) of the at least one query video (10); and
identifying videos (10) within the corpus of reference videos (20) that match the at least one query video.

2. The method for identifying of claim 1, wherein the input search mode indicates identifying all videos (10) within the corpus of reference videos (20) that match the at least one query video (10).

3. The method for identifying of claim 1, wherein the input search mode indicates identifying one video (10) within the corpus of reference videos (20) that match the at least one query video (10).

4. The method for identifying of claim 1, wherein the predetermined duration comprises a predetermined number of consecutive matching frames.

5. The method for identifying of claim 1, wherein the receiving step further includes the processor (140) receiving a desired matching mode.

6. The method for identifying of claim 5, wherein the desired matching mode comprises a global matching mode which indicates that an entire query video (10) of the at least one query video (10) is to be matched to the corpus of reference videos (20).

7. The method for identifying of claim 5, wherein the desired matching mode comprises a sequence matching mode which indicates that a portion of a query video (10) of the at least one query video (10) is to be matched to the corpus of reference videos (20).

8. The method for identifying of claim 7, wherein the sequence matching mode is associated with a granularity parameter (g), the granularity parameter (g) defining a minimum duration of the portion of the query video (10).

9. The method for identifying of claim 8, wherein the minimum duration is a predetermined time or a predetermined number of frames.

10. The method for identifying of claim 1, wherein the visual signature, the primary visual signature (16) and the secondary visual signature (14) are each comprised of a plurality of visual descriptors and features representing visual properties of an image and objects therein.

## Patentansprüche

1. Verfahren zum Identifizieren mehrerer Videos (10) innerhalb eines Korpus von Referenzvideos (20), die mit wenigstens einem Anfragevideo (10) übereinstimmen, wobei das Verfahren Folgendes umfasst:
Bereitstellen des Korpus von Referenzvideos (20); Empfangen eingegebener Suchkriterien durch einen Prozessor (140), wobei die Kriterien das wenigstens eine Anfragevideo (10), einen Parameter, der einen gewünschten Suchmodus repräsentiert, und einen Parameter, der einen gewünschten Übereinstimmungsmodus repräsentiert, beinhalten;
Indizieren jedes Videos (10) in dem Korpus von Referenzvideos (20) von Einzelbild zu Einzelbild durch den Prozessor (140), wobei der Schritt des Indizierens Lesen jedes Videos des Korpus von Referenzvideos von Einzelbild zu Einzelbild durch den Prozessor und Vergleichen eines Einzelbildes mit einem nächsten Einzelbild und Bestimmen einer Untermenge von Einzelbildern innerhalb jedes der Videos beinhaltet, wobei die Untermenge aufeinanderfolgende doppelte Einzelbilder innerhalb des zugeordneten Referenzvideos (10) ausschließt und Ankereinzelbilder, Herzschlageinzelbilder und Schlüsseleinzelbilder beinhaltet, wobei ein Ankereinzelbild ein vorheriges Einzelbild ist, das zum Vergleich mit einem nächsten Einzelbild verwendet wird, ein Schlüsseleinzelbild ein Einzelbild ist, das gemäß gegebenen Übereinstimmungskriterien nicht mit einem Ankereinzelbild, mit dem es verglichen wird, übereinstimmt, und ein Herzschlageinzelbild ein Einzelbild ist, das mit dem Ankereinzelbild, mit dem es verglichen wird, übereinstimmt, aber für das eine Dauer seit dem Ankereinzelbild, mit dem es vergleichen wird, oberhalb einer vorbestimmten Dauer liegt; und
Bestimmen einer sekundären visuellen Signatur (14) für jedes der Referenzvideos (10), wobei jede sekundäre visuelle Signatur (14) der Untermenge von Einzelbildern des zugeordneten Referenzvideos (10) zugeordnet ist, wobei der Schritt des Bestimmens der sekundären visuellen Signatur für jedes Referenzvideo Bestimmen einer sekundären visuellen Signatur basierend auf visuellen Signaturen von jedem der Ankereinzelbilder, der Herzschlageinzelbilder und der Schlüsseleinzelbilder von jedem der Referenzvideos beinhaltet;
Bestimmen einer visuellen Signatur (16) des wenigstens einen Anfragevideos (10) durch den Prozessor (140);
Vergleichen der sekundären visuellen Signatur (14) von jedem Video (10) innerhalb des Korpus von Referenzvideos (20) mit der visuellen Signatur (16) des wenigstens einen Anfragevideos (10) durch den Prozessor (140) und, falls keine Übereinstimmung gefunden wird, Bestimmen einer primären visuellen Referenzsignatur (16) für jedes der Referenzvideos basierend auf visuellen Signaturen von jedem der Einzelbilder des Referenzvideos und Vergleichen der primären visuellen Signatur (16) von jedem der Referenzvideos (10) mit der visuellen Signatur (16) des wenigstens einen Anfragevideos (10); und
Identifizieren von Videos (10) innerhalb des Korpus von Referenzvideos (20), die mit dem wenigstens einen Anfragevideo übereinstimmen.

2. Verfahren zum Identifizieren nach Anspruch 1, wobei der eingegebene Suchmodus Identifizieren aller Videos (10) innerhalb des Korpus von Referenzvideos (20), die mit dem wenigstens einen Anfragevideo (10) übereinstimmen, anzeigt.

3. Verfahren zum Identifizieren nach Anspruch 1, wobei der eingegebene Suchmodus Identifizieren eines Videos (10) innerhalb des Korpus von Referenzvideos (20), die mit dem wenigstens einen Anfragevideo (10) übereinstimmen, anzeigt.

4. Verfahren zum Identifizieren nach Anspruch 1, wobei die vorbestimmte Dauer eine vorbestimmte Anzahl an aufeinanderfolgenden übereinstimmenden Einzelbildern umfasst.

5. Verfahren zum Identifizieren nach Anspruch 1, wobei der Empfangsschritt ferner beinhaltet, dass der Prozessor (140) einen gewünschten Übereinstimmungsmodus empfängt.

6. Verfahren zum Identifizieren nach Anspruch 5, wobei der gewünschte Übereinstimmungsmodus einen globalen Übereinstimmungsmodus umfasst, der anzeigt, dass ein gesamtes Anfragevideo (10) des wenigstens einen Anfragevideos (10) mit dem Korpus von Referenzvideos (20) übereinstimmen muss.

7. Verfahren zum Identifizieren nach Anspruch 5, wobei der gewünschte Übereinstimmungsmodus einen Sequenzübereinstimmungsmodus umfasst, der anzeigt, dass ein Teil eines Anfragevideos (10) des wenigstens einen Anfragevideos (10) mit dem Korpus von Referenzvideos (20) übereinstimmen muss.

8. Verfahren zum Identifizieren nach Anspruch 7, wobei der Sequenzübereinstimmungsmodus einem Granularitätsparameter (g) zugeordnet ist, wobei der Granularitätsparameter (g) eine minimale Dauer des Teils des Anfragevideos (10) definiert.

9. Verfahren zum Identifizieren nach Anspruch 8, wobei die minimale Dauer eine vorbestimmte Zeit oder eine vorbestimmte Anzahl an Einzelbildern ist.

10. Verfahren zum Identifizieren nach Anspruch 1, wobei die visuelle Signatur, die primäre visuelle Signatur (16) und die sekundäre visuelle Signatur (14) jeweils aus mehreren visuellen Deskriptoren und Merkmalen besteht, die visuelle Eigenschaften eines Bildes und eines Objekts darin repräsentieren.

## Revendications

1. Procédé d'identification d'une pluralité de vidéos (10) dans un corpus de vidéos de référence (20) correspondant à au moins une vidéo de requête (10), le procédé consistant à :
fournir le corpus de vidéos de référence (20) ;
recevoir, par un processeur (140), un critère de recherche d'entrée, le critère comprenant l'au moins une vidéo de requête (10), un paramètre représentant un mode de recherche souhaité et un paramètre représentant un mode de correspondance souhaité ;
indexer, par le processeur (140), chaque vidéo (10) du corpus de vidéos de référence (20) trame par trame, l'étape d'indexation, consistant à lire, par le processeur, chacune des vidéos du corpus de vidéos de référence trame par trame, comparer une trame à une trame suivante, et déterminer un sous-ensemble de trames dans chacune des vidéos, le sous-ensemble excluant des trames dupliquées consécutives dans la vidéo de référence associée (10) et incluant des trames d'ancrage, des trames de pulsation et des trames clés, une trame d'ancrage étant une trame précédente utilisée pour une comparaison à une trame suivante, une trame clé étant une trame qui ne correspond pas, selon un critère de correspondance donné, à une trame d'ancrage à laquelle elle est comparée, et une trame de pulsation étant une trame qui correspond à la trame d'ancrage à laquelle elle est comparée, mais dont la durée, depuis la trame d'ancrage à laquelle elle est comparée, est supérieure à une durée prédéterminée ; et
déterminer une signature visuelle secondaire (14) pour chacune des vidéos de référence (10), chaque signature visuelle secondaire (14) étant associée au sous-ensemble de trames de la vidéo de référence associée (10), l'étape de détermination de la signature visuelle secondaire pour chacune des vidéos de référence consistant à déterminer une signature visuelle secondaire sur la base de signatures visuelles de chacune des trames d'ancrage, des trames de pulsation et des trames clés de chacune des vidéos de référence ;
déterminer, par le processeur (140), une signature visuelle (16) de l'au moins une vidéo de requête (10) ;
comparer, par le processeur (140), la signature visuelle secondaire (14) de chaque vidéo (10) du corpus de vidéos de référence (20) à la signature visuelle (16) de l'au moins une vidéo de requête (10), et si aucune correspondance n'est trouvée,
déterminer, pour chacune des vidéos de référence, une signature visuelle principale (16) sur la base de signatures visuelles de chacune des trames de la vidéo de référence, et comparer la signature visuelle principale (16) de chacune des vidéos de référence (10) à la signature visuelle (16) de l'au moins une vidéo de requête (10) ; ; et
identifier des vidéos (10) du corpus de vidéos de référence (20) qui correspondent à l'au moins une vidéo de requête.

2. Procédé d'identification selon la revendication 1, dans lequel le mode de recherche d'entrée indique l'identification de toutes les vidéos (10) du corpus de vidéos de référence (20) qui correspondent à l'au moins une vidéo de requête (10).

3. Procédé d'identification selon la revendication 1, dans lequel le mode de recherche d'entrée indique l'identification d'une vidéo (10) du corpus de vidéos de référence (20) qui correspond à l'au moins une vidéo de requête (10).

4. Procédé d'identification selon la revendication 1, dans lequel la durée prédéterminée comprend un nombre prédéterminé de trames correspondantes consécutives.

5. Procédé d'identification selon la revendication 1, dans lequel l'étape de réception consiste en outre à recevoir, par le processeur (140), un mode de correspondance souhaité.

6. Procédé d'identification selon la revendication 5, dans lequel le mode de correspondance souhaité comprend un mode de correspondance global qui indique qu'une vidéo de requête entière (10) de l'au moins une vidéo de requête (10) doit être mise en correspondance avec le corpus de vidéos de référence (20).

7. Procédé d'identification selon la revendication 5, dans lequel le mode de correspondance souhaité comprend un mode de correspondance séquentiel qui indique qu'une partie d'une vidéo de requête (10) de l'au moins une vidéo de requête (10) doit être mise en correspondance avec le corpus de vidéos de référence (20).

8. Procédé d'identification selon la revendication 7, dans lequel le mode de correspondance séquentiel est associé à un paramètre de granularité (g), le paramètre de granularité (g) définissant une durée minimale de la partie de la vidéo de requête (10).

9. Procédé d'identification selon la revendication 8, dans lequel la durée minimale est un temps prédéterminé ou un nombre prédéterminé de trames.

10. Procédé d'identification selon la revendication 1, dans lequel la signature visuelle, la signature visuelle principale (16) et la signature visuelle secondaire (14) sont constituées chacune d'une pluralité de descripteurs et d'attributs visuels représentant des propriétés visuelles d'une image et d'objets contenus dans celle-ci.
